(19) Europäisches Patentamt
European Patent Office
Office européen des brevets

(11) **EP 2 078 139 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(51) Int Cl.:
*F16D 48/06* (2006.01)   *F01K 23/16* (2006.01)
*F01K 23/10* (2006.01)

(21) Anmeldenummer: **07820694.3**

(22) Anmeldetag: **28.09.2007**

(86) Internationale Anmeldenummer:
**PCT/EP2007/060307**

(87) Internationale Veröffentlichungsnummer:
**WO 2008/043671 (17.04.2008 Gazette 2008/16)**

(54) **ZIELWINKELGEREGELTER EINKUPPELVORGANG**

COUPLING ACTION CONTROL WITH COUPLING ANGLE

RÉGLAGE DE L'ACCOUPLEMENT PAR L'ANGLE D'ACCOUPLEMENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.10.2006 EP 06021138**

(43) Veröffentlichungstag der Anmeldung:
**15.07.2009 Patentblatt 2009/29**

(73) Patentinhaber: **Siemens Aktiengesellschaft 80333 München (DE)**

(72) Erfinder:
• **HUMER, Matthias 44339 Dortmund (DE)**

• **WERTHES, Heribert 45357 Essen (DE)**

(56) Entgegenhaltungen:
JP-A- 10 184 317      US-A1- 2004 011 040
US-A1- 2004 055 272      US-A1- 2005 183 422

• **STOLZLE K ET AL: "SYNCHRONISIERENDE, SELBSTSCHALTENDE KUPPLUNGEN FUR EIN-WELLEN-COGENERATION-KRAFTWERKE" ANTRIEBSTECHNIK, VEREINIGTE FACHVERLAGE, MAINZ, DE, Bd. 34, Nr. 8, 1. August 1995 (1995-08-01), Seiten 46-49, XP000517052 ISSN: 0722-8546**

**Beschreibung**

Die Erfindung betrifft ein Verfahren zum Einkuppeln einer Antriebswelle einer Strömungsmaschine mit einer Abtriebswelle mittels einer Kupplung.

Ein solches Verfahren ist z.B. in Dokument US 2005/183422 A1 offenbart.

In GuD-Kraftwerken (Gas- und Dampfkraftwerken) stehen Gas- und Dampfturbinen als Antriebsarten zur Verfügung. Gas- und Dampfturbinen sind Strömungsmaschinen. Durch seine kurze Anfahrzeit kann das GuD-Kraftwerk große Energiemengen in kurzer Zeit zur Verfügung stellen. Die Kombination von Gas- und Dampfturbinen erzeugt elektrische Energie mit einem guten Wirkungsgrad bei hoher Flexibilität bezüglich verschiedener Primärenergieträger, sowie der Betriebseigenschaften des gesamten Turbosatzes.

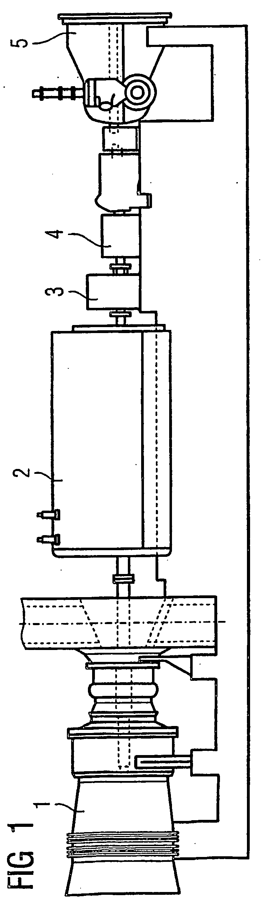

Gas- und Dampfkreislauf sind zur Steigerung des Wirkungsgrades in einem System verbunden. Mit dem heißen Abgas der Gasturbine wird im Abhitzekessel Wasserdampf erzeugt, welcher in der Dampfturbine (Drei-Druck-Prozess) ein mechanisches Moment liefert. Diese Kombination erhöht den Wirkungsgrad bei der Erzeugung elektrischer Energie von ca. 36% auf beispielsweise 57 (%). Eine solche Anlage ist beispielhaft in Figur 1 (Prinzipskizze einer Einwellen GuD-Anlage mit SSS-Kupplung zwischen Dampfturbine und Synchrongenerator) dargestellt. Die beispielhafte GuD-Einwellenanlage weist eine Gasturbine 1, einen Generator 2, einen Erreger 3, eine Kupplung 4 und eine Dampfturbine 5 auf.

Bei der in Figur 1 beispielhaft betrachteten Einwellen-Anlage befinden sich Gas- und Dampfturbine mit nur einem Generator auf einem gemeinsamen Wellenstrang. Durch den Wegfall eines zweiten Generators und dessen zugehörigen Komponenten können ca. 10% bei den Investitionskosten eingespart werden.

Um die Vorteile der Gasturbine bestmöglich nutzen zu können, wird die Dampfturbine zuerst vom Wellenstrang getrennt. Bei Betriebstemperatur kann die Dampfturbine nahezu unabhängig vom Lastzustand des Generators über eine Kupplung, z.B. über eine synchronisierende, selbstschaltende Überholzahnkupplung (SSS-Schaltkupplung) eingekuppelt werden.

Das System Gasturbine und Generator weist dabei eine synchrone Drehzahl auf. Wenn die Dampfturbine diese Drehzahl überschreitet, wird sie über ein Schraubengewinde automatisch eingekuppelt und kann anschließend Leistung an den elektrischen Generator übertragen. Die gesamte Leistung des Turbosatzes verteilt sich ca. zu zwei Dritteln auf die Gas-, und zu einem Drittel auf die Dampfturbine.

Im stationären gekuppelten Leistungsbetrieb ergibt sich eine Abhängigkeit der gemessenen Wellen und Lagerschwingung von der relativen Winkelstellung der Teilwellenstränge zueinander, unabhängig davon ob es sich um Maschinen, die bei 50 Hz oder 60 Hz betrieben werden, handelt. Bei bestimmten Winkelstellungen werden dabei die zulässigen Grenzwerte für Lager- und Wellenschwingungen überschritten.

Messungen der Biegeschwingungen vor und hinter der Kupplung und des zugehörigen Kuppelwinkels können als Grundlage dienen, günstige und ungünstige Positionen zu identifizieren.

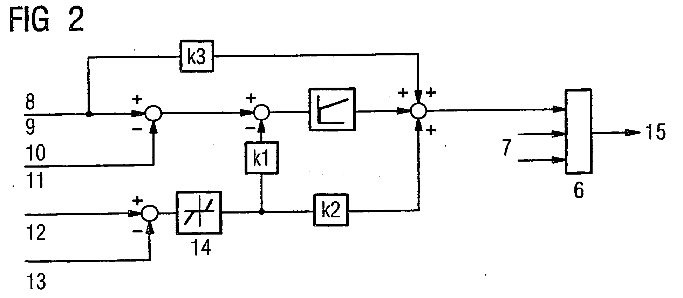

Sowohl der Drehzahl-/Leistungsregler der Gasturbine, als auch der Drehzahl-/Öffnungsregler der Dampfturbine haben eine PI-Struktur. Wie in Figur 2 (Grundstruktur des Gas- und Dampfturbinenreglers) zu sehen, kommen über eine zentrale Minimalwert-Auswahl 6 weitere Regler 7 in Eingriff. In Figur 2 wird ein Leistungssollwert 8, ein Öffnungssollwert 9, ein Leistungsistwert 10, ein Öffnungsistwert 11, ein Drehzahlsollwert 12, und ein Drehzahlistwert 13 der Grundstruktur zugeführt, wobei die Signale 12 und 13 einem Totband 14 zugeführt werden. Die Grundstruktur erzeugt ein Ventilstellung-Istwert 15, wobei eine Statik k1, der Einfluss Frequenzänderung k2 und der Einfluss Leistungssollwertänderung k3 berücksichtigt werden.

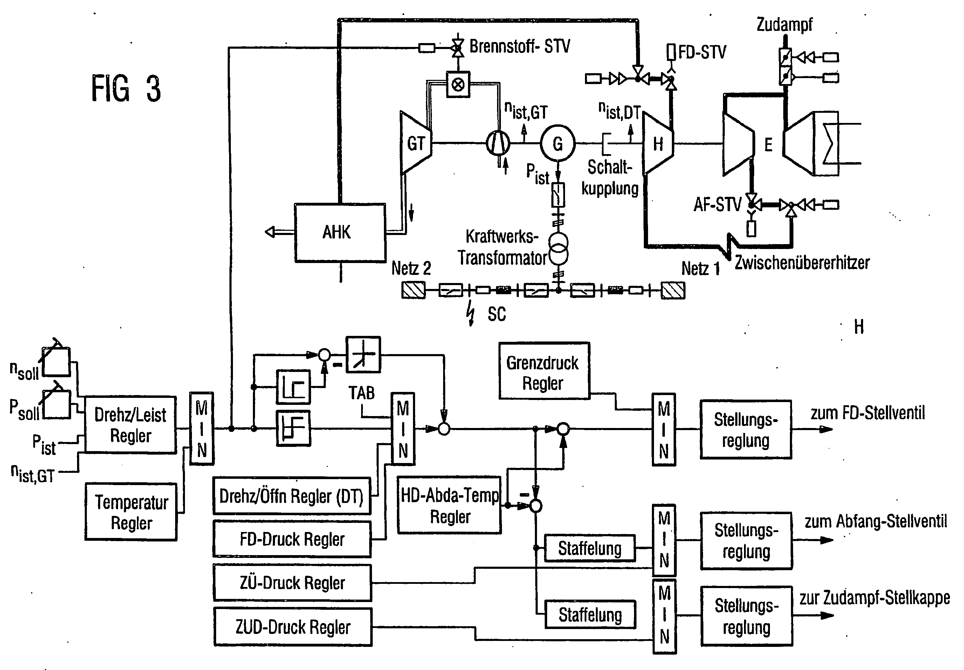

Eine Übersicht über eine beispielhafte Regelung der Einwellenanlage ist in Figur 3 (Übersicht der GuD-Einwellenanlage) dargestellt. Der Einkuppelvorgang bei Nennbetrieb der Gasturbine wird nur durch den Drehzahlregler der Dampfturbine bestimmt. Da die durchgeführten Simulationen somit von den übrigen Reglergrößen weitgehend unabhängig sind, wird vorliegend hauptsächlich auf den Dampfturbinen-Drehzahlregler eingegangen.

Der Drehzahl-/Öffnungsregler hat die Aufgabe, die vom Abhitzekessel erzeugte und in die Dampfturbine strömende Dampfmenge entsprechend den vorgegebenen Sollwerten für die Drehzahl und die Öffnung zu regeln. Es handelt sich hierbei um einen 2-Größen-Regler, welcher die Drehzahl und Leistung des Turbosatzes für folgende Betriebsfälle einstellt:

- Anfahren der Dampfturbine
- Einkuppeln mit dem Wellenstrang der Gasturbine
- Belasten der Turbine
- Lastabwurf und Inselbetrieb
- Abfahren der Turbine

Die Ausgangssignale der einzelnen Öffnungssollwerte werden in der Öffnungssollwertbildung miteinander verknüpft und steuern die zugehörigen Stellungsregelungen an. Jede Stellungsregelung positioniert über ein Servoventil den elektrohydraulischen Antrieb (EHA), der wiederum das zugehörige Stellventil betätigt.

Außerdem ist je Stellventil bzw. Stellklappe (Frisch-, Abfang- und Zudampf) eine Antriebseinzelansteuerung vorhanden, über die eine Begrenzung der einzelnen Stellventile bzw. Stellklappe erfolgen kann.

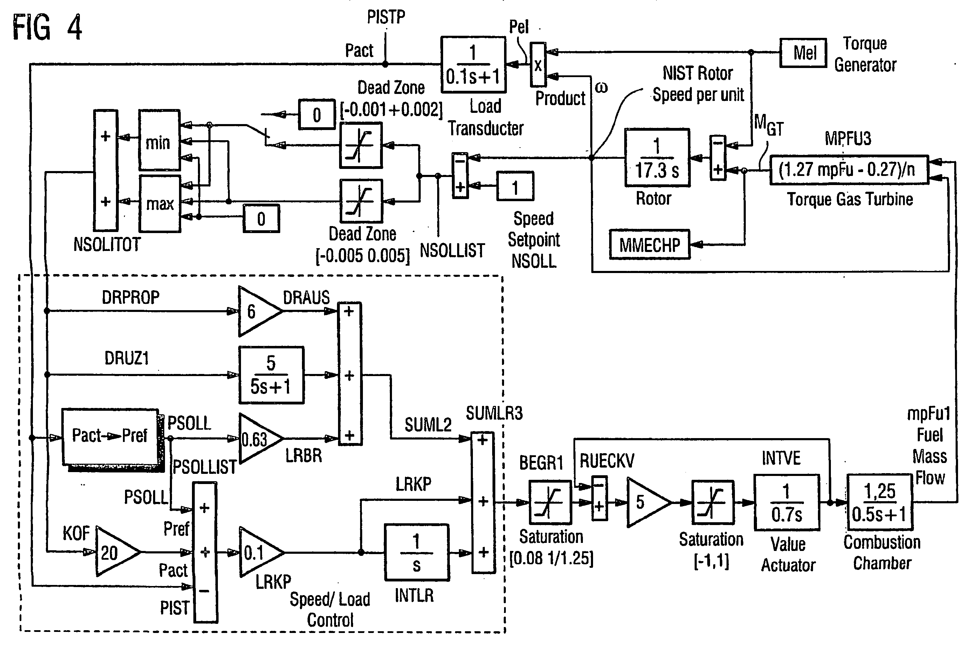

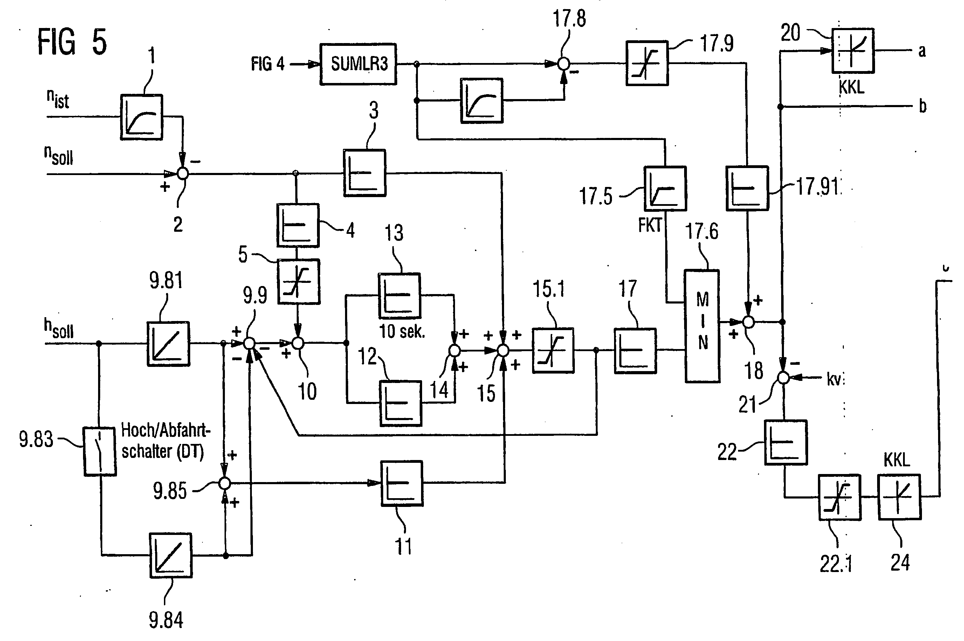

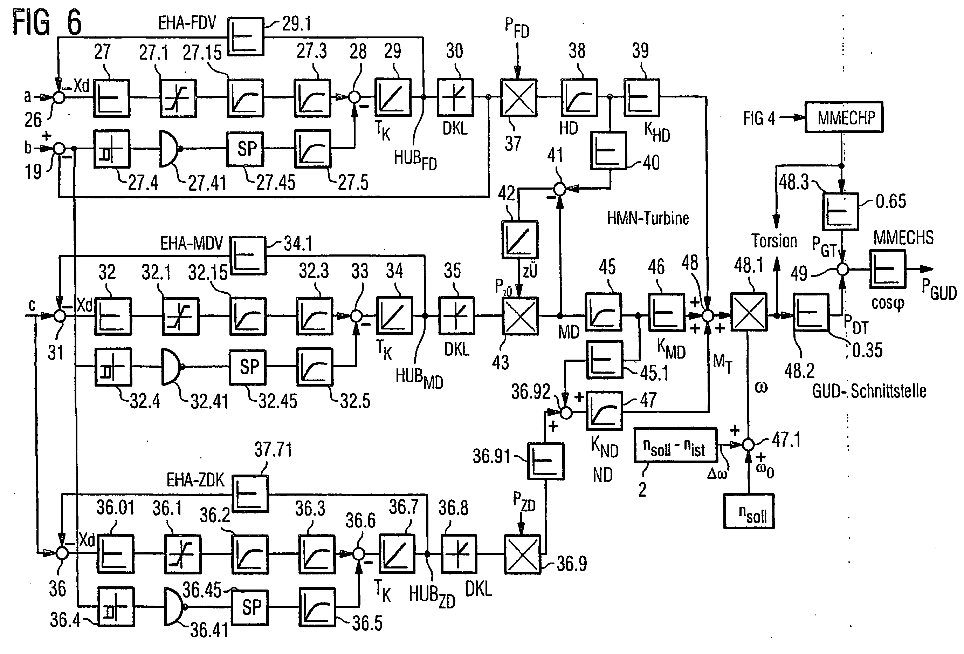

Der Drehzahl-/Leistungsregler der Gasturbine mit Primärfrequenzeinfluss und Grenzfrequenzeinfluss wurde sehr detailliert modelliert, während die Gasturbine vereinfacht nachgebildet wurde (siehe Figur 4; Gas Turbine V94.2A). Bei der Modellbildung der Dampfturbine wurde sowohl der Drehzahl-/Öffnungsregler (Figur 5; Drehzahl-Öffnungsregler Dampfturbine) als auch die Dampfturbine selber (Figur 6; GuD-Dampfturbine) sehr genau nachgebildet.

Im Drehzahlregler-Betrieb wird die Dampfturbine bis zu einer Nenndrehzahl (äquivalent Ist-Drehzahl des Gasturbinen-Wellenstranges) gefahren. Wenn die Dampfturbinendrehzahl die Gasturbinendrehzahl überschritten hat, findet eine automatische Kupplung der beiden Wellenstränge statt. Die Reglerstruktur wird dabei ebenfalls automatisch vom Drehzahlregler-Betrieb in den Öffnungsregler-Betrieb umgeschaltet.

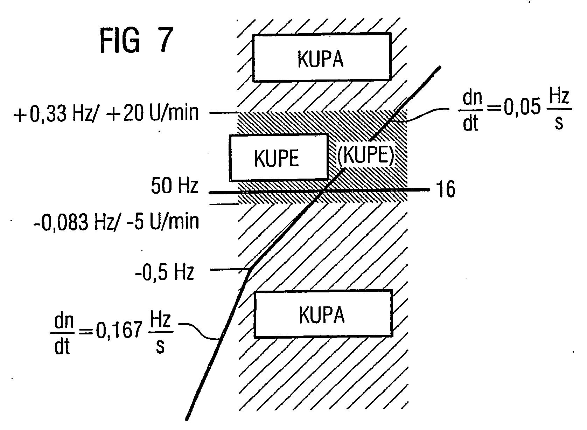

Der Drehzahlsollwert beim Anfahren ist in Figur 7 (Drehzahltransiente beim Hochfahren der Dampfturbine) dargestellt. Von einem stationären Anwärmbetrieb von einigen hundert U/min ausgehend wird die Dampfturbine mit einer Transiente von 0,167 Hz/s beschleunigt. Sobald der Istwert eine bestimmte knapp untersynchrone Frequenz erreicht hat, wird eine flachere Transiente von 0,05 Hz/s als Sollwert zum Einkuppeln vorgegeben. Der Standardwert für diese Umschaltung beträgt $f_{sync}$-0,5 Hz (sowohl für 50 Hz als auch 60 Hz Kraftwerke).

Aus der relativen Umdrehungszahl der beiden Teilwellenstränge wird das Signal KUPE (Kupplung Ein) für die Weiterverarbeitung des Kupplungszustandes generiert. Figur 7 zeigt das Fenster für dieses Signal von -0,083 Hz bis +0,33 Hz, resp. -5 U/min bis +20 U/min bezogen auf die Nenndrehzahl 16 der Gasturbine bzw. der Abtriebswelle.

Die Erfahrungen im Betrieb haben gezeigt, dass bei einem engeren Fenster das Signal KUPE aufgrund von Messungenauigkeiten nicht stabil bleibt. Wenn durch eine defekte Kupplung nicht eingekuppelt wird, verhindert die obere Grenze des Fensters das weitere Ansteigen der Drehzahl. Es ist offensichtlich, dass das Signal KUPE, welches für alle folgenden Operationen gültig ist, bereits gesetzt wird bevor die Dampfturbine eine synchrone Drehzahl erreicht hat. Wie bereits erwähnt, beginnt der Einkuppelvorgang jedoch erst bei Überschreiten der synchronen Generatordrehzahl.

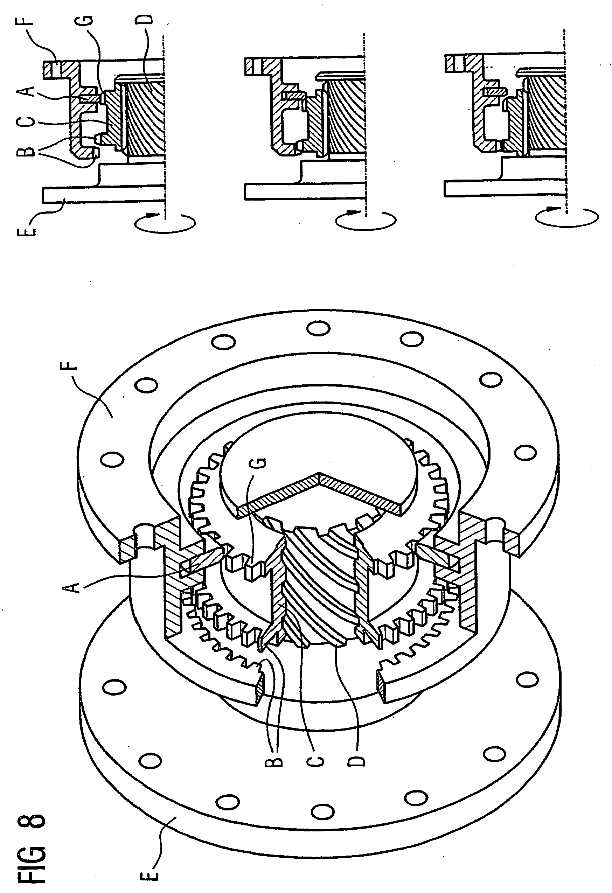

Die Figur 8 (Prinzip einer SSS-Schaltkupplung) zeigt das Prinzip der Kupplung. Die Schaltmuffe C dreht sich mit der Drehzahl der Dampfturbine, bis die synchrone Drehzahl erreicht ist, woraufhin sie von der Klinke A am Schaltteil der Generatorwelle F festgehalten wird. Bei übersynchroner Drehzahl führt dies aufgrund des Gewindes zu einer axialen Bewegung der Muffe in Richtung der Dampfturbine. Schon nach kurzer Zeit erfolgt der Eingriff der Zähne B, und über diese eine Übertragung des Antriebsmoments. Weiter weist die beispielhaft dargestellte SSS-Schaltmuffe ein Steilgewinde D, eine Antriebsseite E (Dampfturbine) und eine Klinkenverzahnung G auf. In Figur 8 sind zudem auf der rechten Zeichnungsebene drei kleinere Bilder dargestellt. Das obere Bild zeigt einen ausgekuppelten Zustand, das mittlere Bild zeigt eine Einrückbewegung und das untere der Bilder zeigt einen eingekuppelten Zustand.

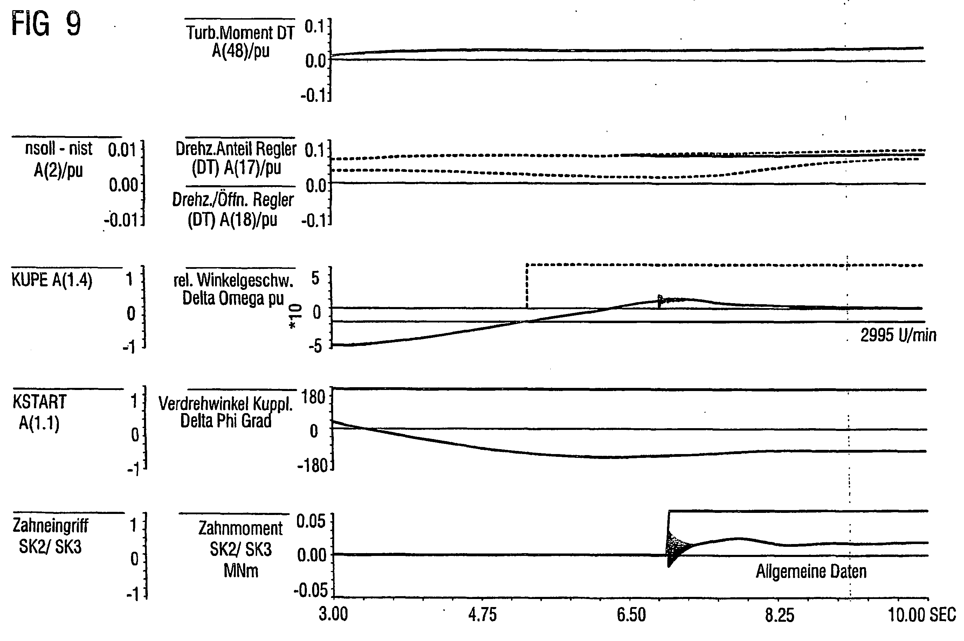

Eine Simulation mit der aktuellen Regelstrategie ist in Figur 9 (Einkuppelvorgang nach dem Regelkonzept im Stand der Technik) dargestellt. Das Signal KUPE kommt deutlich vor Beginn des Einkuppelvorgangs und vor dem Zahneingriff. Infolgedessen wird sofort der Drehzahlregler-Anteil der Dampfturbine bei seinem aktuellen Wert festgehalten und gleichzeitig der Öffnungsregler-Anteil hinzugeschaltet, obwohl sich die noch ausgekuppelte Dampfturbine im Drehzahlbetrieb befindet.

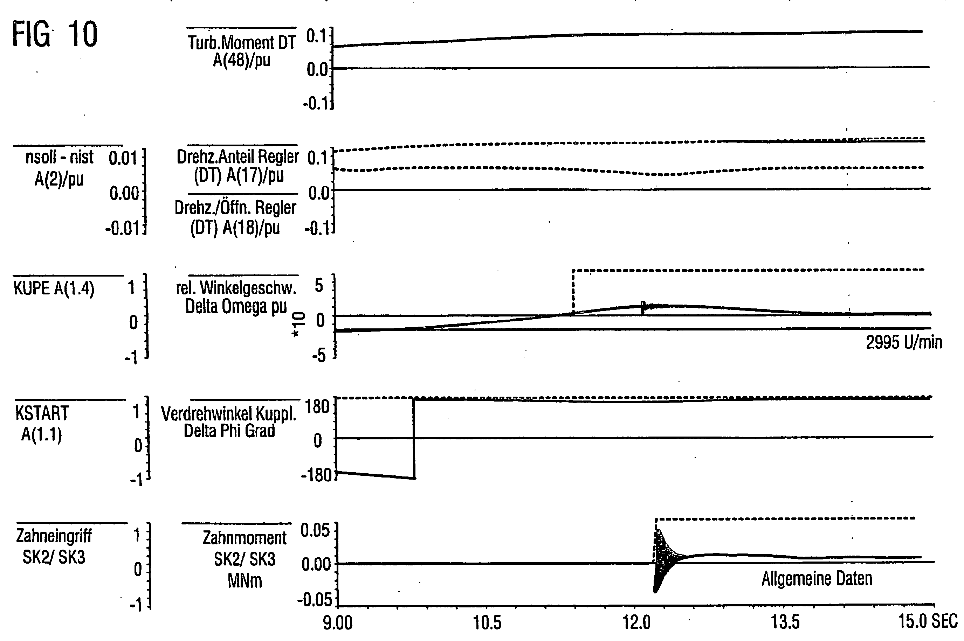

Der Öffnungsregleranteil folgt einer sehr flachen Transiente von 10% pro Minute, welche im Vergleich zum Einfluss des Drehzahlreglers nur einen kleinen Einfluss auf den folgenden Einkuppelvorgang nimmt. Figur 10 (Einkuppelvorgang mit modifizierten Signal KUPE) zeigt diesen Vorgang nach Änderung des Signals KUPE. Erst wenn die Drehzahlen der beiden Teilwellenstränge gleich sind, wird hier KUPE gesetzt. Offensichtlich beeinflusst diese Änderung das Einkuppeln nicht maßgeblich.

Beispielsweise bei GuD-Einwellenanlagen werden zwei rotierende Teilwellenstränge bei synchroner Drehzahl beliebig miteinander gekuppelt. Hieraus resultieren unterschiedlich hohe Wellen- und Lagerschwingungen, so dass möglicherweise vorgegebene Schwingungsalarmwerte überschritten werden können, die zu aufwändigen Nachwuchtmaßnahmen oder sogar zu Pönaleforderungen des Betreibers an den Lieferanten der GuD-Anlage führen können.

Mittels der bekannten Nachwuchtmaßnahmen sollte ein.gutes Schwingungsverhalten des gesamten Wellenstranges erreicht werden. Allerdings erfolgt das Einkuppeln bisher ungeregelt und nach dem Zufallsprinzip.

Der Erfindung liegt daher die Aufgabe zugrunde, ein Verfahren der Eingangs genannten Art bereitzustellen, bei dem sichergestellt ist, dass immer mit dem kleinsten Schwingungswert gekuppelt wird, wobei der gesamte Wellenstrang wuchtbar werden und bleiben soll.

Erfindungsgemäß wird die Aufgabe durch ein Verfahren mit den Merkmalen des Anspruchs 1 gelöst. Weitere vorteilhafte Ausgestaltungen sind in den Unteransprüchen offenbart.

Insgesamt wird mittels des erfindungsgemäßen Verfahrens eine allgemeine Mess- und Regelungsstrategie zum Einkuppeln der Dampfturbine vorgestellt, welche möglichst geringe Wellen- und Lagerschwingungen nach Abklingen aller Ausgleichsvorgänge zur Folge hat.

Gleichzeitig werden mit der Erfindung die theoretischen und regelungstechnischen Grundlagen für ein geeignetes Automatisierungsgerät geschaffen. Dieses soll aus dem Schwingungsverhalten sowie den Synchronisationssignalen der Teilwellenstränge vor dem Einkuppeln die anzustrebenden günstigen Kuppelpositionen ermitteln, bei der die Biegeschwingung möglichst die geringsten Werte annimmt.

Der Erfindung liegt die Erkenntnis zugrunde, dass die Regelung der Dampfturbine entsprechend modifiziert werden kann, um sowohl die exakte Bestimmung des optimalen Einkuppelwinkels, als auch das genaue Einkuppeln an der günstigen Position zu gewährleisten, um nicht ungeregelt und zufällig einzukuppeln.

Das für die Erfindung verwendete Modell der Einwellenanlage einschließlich Generator und Netz wurde in NETOMAC® erstellt, welches auch das Torsionsverhalten der Kupplung berücksichtigt.

Im Stand der Technik wurde in erster Linie das Verhalten der Kupplung bei eingekuppeltem Zustand untersucht (Leistungsbetrieb). Um den eigentlichen Einkuppelvorgang zu simulieren wurde das vorhandene Modell um das Modul "Drehzahlhochfahren" erweitert.

Obwohl zwischen Figur 9 und Figur 10 keine deutliche Änderung zu erkennen ist, wird bevorzugter Weise eine Verschiebung des Signals KUPE von einer Drehzahldifferenz -5 U/min auf 0 U/min vorgesehen, um eine klare Trennung von Drehzahlregler- und Öffnungsreglerbetrieb zu gewährleisten. Ein Signal KUPA (Kupplung Aus) wird dabei vorzugsweise erst wieder bei Unterschreiten der Differenz von -5 U/min gesetzt werden, um Fehler durch Messungenauigkeiten zu verhindern.

Die Transiente des Drehzahlreglers vor dem Einkuppeln von 0,05 Hz/s ist ursprünglich aus den Erfahrungen beim Synchronisieren des Generators abgeleitet worden.

Vorteilhaft wird der genannte Wert weiter optimiert, um ein sanfteres Einkuppeln zu gewährleisten. Hier ist bevorzugt eine flachere Transiente vorgesehen, um unzulässige Stöße beim Zahneingriff zu vermeiden.

Sowohl zur Bestimmung der günstigen Kuppelwinkel als auch zum Zielwinkel geregelten Einkuppeln, ist bevorzugt vorgesehen, wie bereits oben erwähnt, dass das aktuelle Regelungskonzept modifiziert wird.

Wie oben beschrieben, fährt die Dampfturbine nach Erreichen der minimalen Betriebstemperatur von der Anwärmdrehzahl mit einem festen Transientenverlauf hoch bis zum selbstständigen Einkuppeln ab synchroner Drehzahl.

Dabei ist der Zielwinkel $\varphi_K$ bzw. der Kuppelwinkel $\varphi_K$ bei Endanschlag der Schaltmuffe im Stand der Technik rein zufällig.

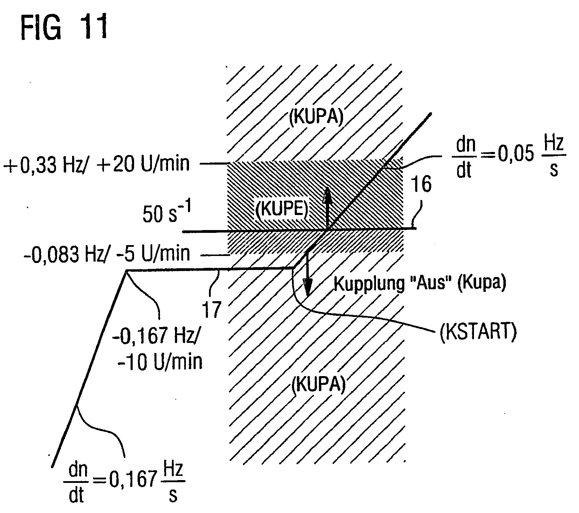

Um einen gegebenen Winkel zu erreichen, wird die Dampfturbine vorteilhaft auf eine knapp untersynchrone Drehzahl (Haltedrehzahl) hochgefahren und dort gehalten. Der Sollwert der Drehzahl kann nach Figur 11 (Drehzahltransiente bei zielwinkelgeregeltem Hochfahren und Einkuppeln) vorgegeben werden. Vorteilhaft wird eine Haltedrehzahl 17 eingeführt. Vorteilhaft ist die Einführung der Haltedrehzahl 17 bevorzugt bei - 10 U/min, was ca. -0,167 Hz entspricht.

Diese Drehzahl wird gehalten bis ein vom Zielwinkel (relativer Verdrehwinkel $\varphi_K$, Kuppelwinkel $\varphi_K$) abhängiger Startwinkel zwischen Antrieb und Abtrieb erreicht ist. Wenn der Verdrehwinkel $\varphi_K$ gleich dem vorgegebenen Startwinkel ist, wird das Signal KSTART (Kuppeln Starten) gesetzt. Ab diesem Zeitpunkt wird mit beliebiger Drehzahltransiente eingekuppelt (vorzugsweise 0,05 Hz/s).

Es soll noch darauf hingewiesen werden, dass in Figur 11 die empfohlene Änderung des Signals KUPE dargestellt ist. Alle folgenden Simulationen unterliegen auch dieser Änderung.

Bei bekanntem Zielwinkel $\varphi_K$ ist bevorzugt auch der zu überschreitende Winkel $\Delta\varphi$ vom Startzeitpunkt bis zum Ende des Einkuppelvorgangs zu ermitteln.

Eine Berechnung dieses Winkels $\Delta\varphi$ würde hochgenaue Modelle jeder einzelnen Anlage einschließlich aller dynamischen Einflüsse erfordern; dies ist so nicht praktikabel. Die bevorzugte Möglichkeit besteht in der Messung dieses Winkels $\Delta\varphi$ im Lastbetrieb der Gasturbine. Man kann davon ausgehen, dass es ein, konstantes $\Delta\varphi$ für jede GuD-Anlage (Anlagenspezifisch) gibt, welches für alle möglichen Zielwinkel $\varphi_K$ gleich ist. Simulationen des Einkuppelvorgangs bei verschiedenen Zielwinkeln haben das bestätigt.

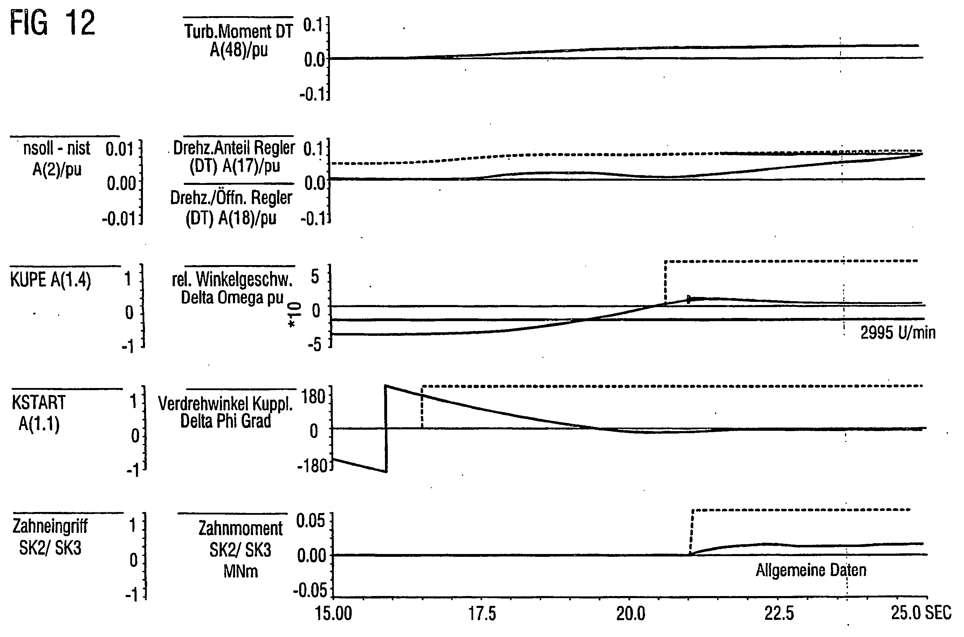

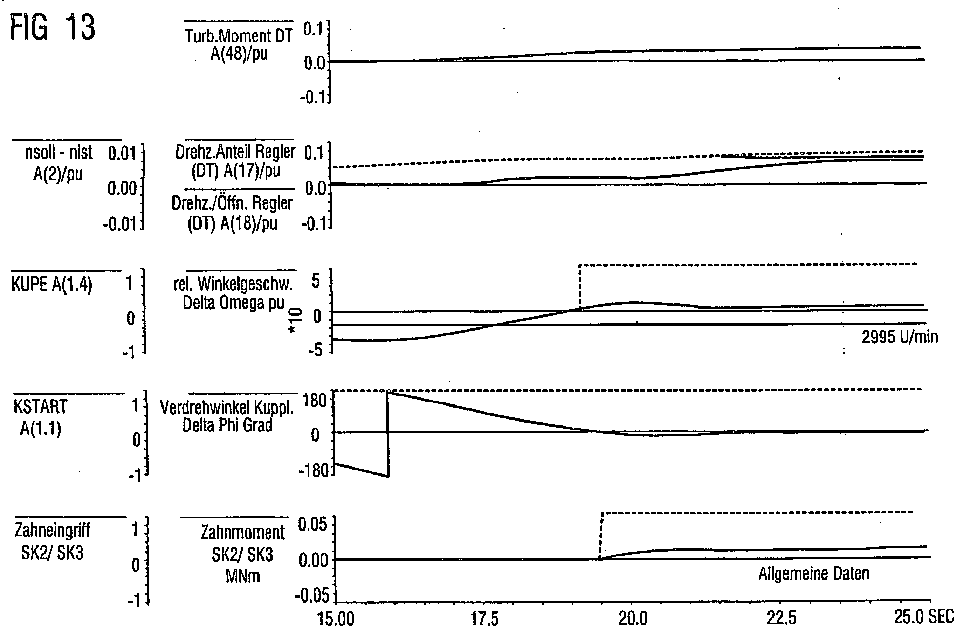

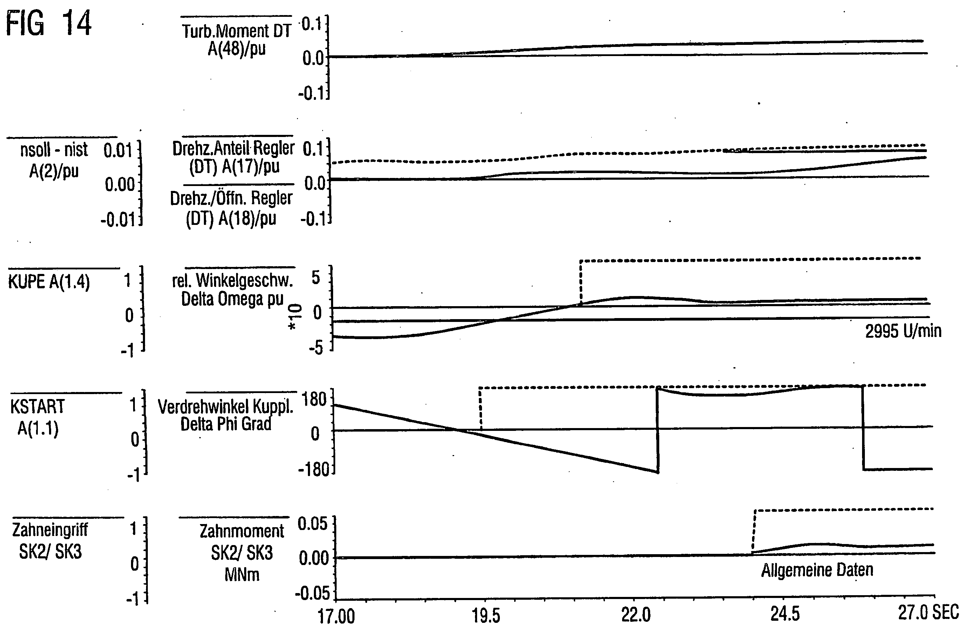

Die Figuren 12, 13 und 14 (Einkuppelvorgang mit Zielwinkel) zeigen die Simulationsergebnisse für die Zielwinkel (relativer Verdrehwinkel $\varphi_K$) 0° (Figur 12), 90° (Figur 13) und 180° (Figur 14). Bei dem verwendeten Kupplungs-Modell ergibt sich ein $\Delta\varphi$ von ca. 145°. Der Startwinkel $\varphi_0$ berechnet sich damit zu

$$\varphi_0 = \varphi_K - \Delta\varphi \,.$$

In allen drei Fällen wird der vorgegebene Zielwinkel $\varphi_K$ erreicht. Das Torsionsverhalten, welches im Modell berücksichtigt wird, ist offensichtlich nicht maßgeblich abhängig vom Kuppelwinkel bzw. Zielwinkel (relativer Verdrehwinkel) $\varphi_K$.

Der Sollwertverlauf der Drehzahl aus Figur 11 kann zusätzlich für die Bestimmung des optimalen Einkuppelwinkels (relativer Verdrehwinkel $\varphi_K$) verwendet werden.

Durch Sperrung des Signals KSTART bleibt die Dampfturbine auf der Haltedrehzahl -10 U/min bezüglich des Generators. In diesem stationären ausgekuppelten Zustand der beiden Teilwellenstränge werden dann die Wellenschwingungen gemessen und verglichen, um so den optimalen Zielwinkel zu bestimmen.

Falls bei bestehenden Anlagen eine Kuppelkarte existiert, und somit ein günstiger Kuppelwinkel identifiziert ist, kann dieser als Zielwinkel $\varphi_K$ vorgegeben werden. Ein günstiger Winkel muss dann nicht mehr bestimmt werden.

Um zu einem besseren Verständnis der betrachteten Probleme zu gelangen, werden einige grundlegende Betrachtungen zum Biegeschwingungsverhalten einer Welle angestellt. Dazu wird ein elementares Modell eines Laval-Läufers als Ersatz für den jeweiligen Teilwellenstrang vorgestellt, dessen Verhalten die prinzipiellen Vorgänge beschreibt.

Die im Folgenden verwendeten Grundlagen entstammen R. Gasch, Rotordynamik, Springer Verlag, Berlin, 1975 und sind dort ausführlich hergeleitet. Die Formeln sind bevorzugt in Anpassung an das Messsystem ADRE geringfügig verändert, um später die gegebenen Messdaten direkt einsetzen zu können.

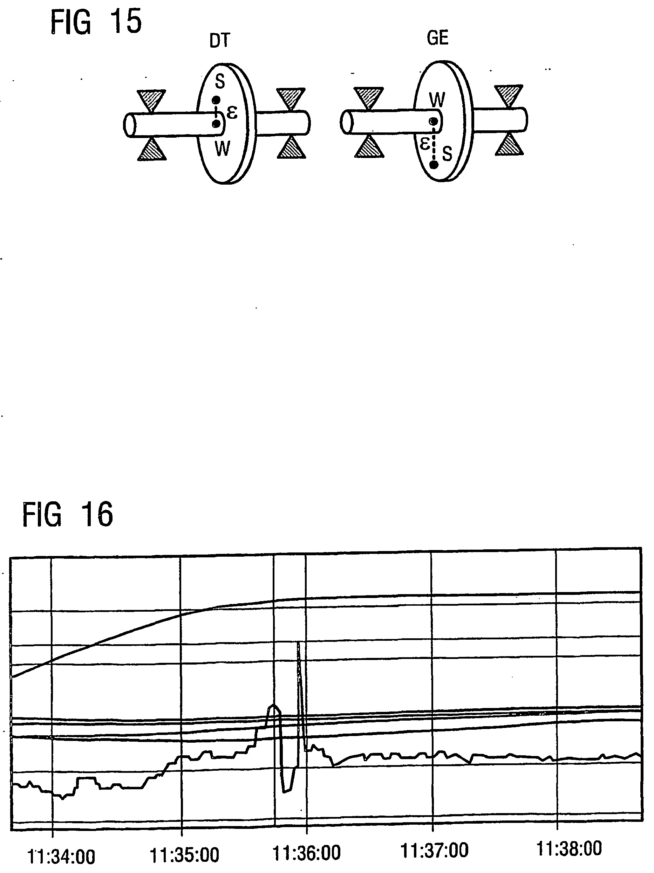

Als einfachstes Modell eines Wellenstranges bietet sich der Laval-Läufer wie in Figur 15 (Elementares Modell der Teilwellenstränge eines Laval-Läufers) beispielhaft dargestellt an. Hierbei handelt es sich um eine massebehaftete Scheibe mit einem vom Wellendurchstoßpunkt W aus um die Strecke $\varepsilon$ verlagerten Schwerpunkt S als Teil einer masselosen Welle in zwei starren Lagern. Jeweils ein solcher Laval-Läufer soll für die Dampfturbine (DT), sowie Gasturbine und Generator (GE) stehen.

Aus mathematischer Sicht vorteilhaft erscheint die Darstellung für den Ort von S und W als komplexe Raumzeiger. Dabei entsprechen der Realteil der Z-Koordinate und der Imaginärteil der Y-Koordinate:

$$r_W = z_W + j \cdot y_W \;\; ; \;\; r_S = z_S + j \cdot y_S \qquad\qquad (1)$$

Diese Darstellung bietet den entscheidenden Vorteil die Methoden der komplexen Rechnung verwenden zu können, die bevorzugt für die Bestimmung eines günstigen Kuppelwinkels $\varphi_K$ (Zielwinkel, relativer Verdrehwinkel) verwendet wird.

Unter Vernachlässigung der Dämpfung, der Gewichtskraft und der Lagersteifigkeiten ergibt sich die folgende Bewegungsgleichung für den Wellendurchstoßpunkt:

$$\ddot{r}_W + \omega_0^2 \cdot r_W = \varepsilon \cdot \omega^2 \cdot e^{j(\omega t - \varphi_0)} \qquad\qquad (2)$$

$\omega_0$ ist die kritische Kreisfrequenz, welche sich aus der Masse und der Federsteifigkeit der Welle ergeben, und $\varepsilon$ ist der Abstand zwischen S und W.

Da es sich hier um eine lineare Differentialgleichung (Dgl.) handelt, besteht die Lösung aus einem homogenen Teil, welcher von Anfangsbedingungen (z.B. Stößen beim Einkuppeln) abhängt und einem partikulären Teil erzwungen durch den Antrieb der Welle. Die beiden Lösungen überlagern sich, womit sie einzeln betrachtet werden können. Unter Berücksichtigung der Dämpfung klingt die homogene Lösung der Dgl. nach kurzer Zeit ab. Figur 16 (Messung der Wellenschwingungen beim Einkuppelvorgang Versuchsanlage 1) zeigt die Messung der Wellenschwingungen eines Einkuppelvorgangs bei einer ersten Versuchsanlage. Hier ist deutlich eine große Spitze in der Schwingung beim Einkuppeln zu erkennen, welche sehr schnell abklingt. Danach erreicht die Schwingungsamplitude einen stationären Wert. Die homogene Lösung der Bewegungsgleichung bestimmt den Spitzenwert und soll im Weiteren nicht berücksichtigt werden, da hier nur die stationären Wellenschwingungen betrachtet werden.

Die partikuläre Lösung hingegen liefert jeweils den Ort von S und W im stationären Betrieb, und damit die Amplitude der Wellenschwingung nach Abklingen der Ausgleichsvorgänge:

$$r_{W_\varepsilon} = \varepsilon \cdot \frac{\left(\omega/\omega_0\right)^2}{1 - \left(\omega/\omega_0\right)^2} e^{j(\omega t + \varphi_0)} \;\; ; \;\; r_{S_\varepsilon} = \varepsilon \cdot \frac{1}{1 - \left(\omega/\omega_0\right)^2} e^{j(\omega t + \varphi_0)} \qquad (3)$$

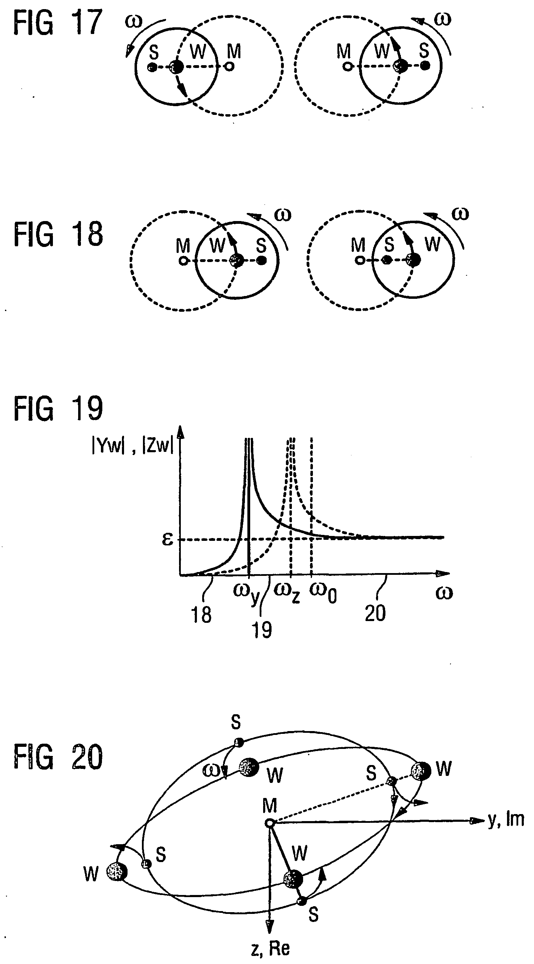

Wellenmittelpunkt und Schwerpunkt bewegen sich auf einer Kreisbahn (siehe Figur 17; Wellenmittelpunkt und Schwerpunkt bewegen sich auf einer Kreisbahn, beide Teilwellenstränge haben gleichen Drehsinn und $\omega$ ist kleiner als $\omega_0$) in Richtung des Wellendrehsinns um den Rotationsmittelpunkt M mit der synchronen Winkelgeschwindigkeit $\omega$. Dabei liegen die Punkte M, W und S auf einer Geraden.

Unter den oben getroffenen Annahmen gibt es eine kritische Kreisfrequenz $\omega_0$ jeweils abhängig von Masse und Federsteifigkeit der Welle, bei der die Wellenschwingungen unendlich groß werden. Unterhalb dieser Kreisfrequenz - unterkritischer Betrieb - befindet sich der Schwerpunkt außerhalb des Wellendurchstoßpunktes. Bei Durchfahren der kritischen Drehzahl macht er einen Phasensprung und wandert bei größer werdenden Drehzahlen - überkritischer Betrieb - näher zum Mittelpunkt. Dieser Vorgang wird auch Selbstzentrierung der Welle genannt, da die Amplitude der Wellenschwingung kleiner wird.

Aus Figur 17 wird ersichtlich, dass zwei Teilwellenstränge also möglichst zusammengekuppelt werden sollten, wenn der Winkel zwischen den Raumzeigern beider Wellenschwerpunkte gerade 180° beträgt. In diesem Fall sind die Schwerpunkte auf der jeweils gegenüberliegenden Seite und heben sich in ihrer Wirkung zumindest teilweise auf. Der neue Schwerpunkt des gekoppelten Systems ist dann näher am Wellendurchstoßpunkt.

Wenn beide Wellenstränge mit überkritischer Drehzahl betrieben werden sind beide Schwerpunkte innen. Auch hier muss also der Winkel zwischen den Raumzeigern gleich 180° sein. Wenn hingegen eine Welle unterkritisch und eine Welle überkritisch laufen, sollte der Winkel 0° betragen, da in diesem Fall die Schwerpunkte gegenüberliegen, wie in Figur 18 (Links unterkritisch, Rechts überkritisch, beide Teilwellenstränge haben gleichen Drehsinn) zu sehen ist.

Vorzugsweise werden die Wellen u. a. wegen des Effekts der Selbstzentrierung überkritisch betrieben, was eine Vereinfachung bei der Findung eines günstigen Kuppelwinkels $\varphi_K$ (Zielwinkel, relativer Verdrehwinkel) bedeutet.

Wenn die Dämpfung in Betracht gezogen wird, wird die Wellenschwingung bei kritischer Kreisfrequenz auf einen endlichen aber weiterhin unzulässigen Wert begrenzt. Bei Durchfahren von $\omega_o$ springt der Schwerpunkt nicht direkt von außen nach innen, sondern dreht sich abhängig vom Dämpfungsfaktor mehr oder weniger langsam nach innen. Da keine Welle stationär in der Nähe der kritischen Kreisfrequenz betrieben wird und der besagte Übergang von S nur in deren Nähe stattfindet, bleiben die oben getroffenen Aussagen bestehen.

In den allermeisten Fällen kann die Steifigkeit der Lager mitberücksichtigt werden, wodurch die kritische Kreisfrequenz unter Umständen erheblich abfällt. Hier fällt vor allem die Anisotropie der Federkonstante bezüglich der beiden Raumrichtungen ins Gewicht. $\omega_o$ hängt von der Federkonstante und der Masse ab, d.h. bei unterschiedlichen Werten der Konstanten entstehen zwei kritische Kreisfrequenzen $\omega_z$ und $\omega_y$, in der Regel ausgeprägt in horizontaler und vertikaler Richtung. Somit gibt es einen weiteren zwischenkritischen Bereich in dem die Welle betrieben werden kann. Figur 19 (Wellenausschläge getrennt nach beiden Raumrichtungen) zeigt die je nach Kreisfrequenz unterschiedlich starken Wellenausschläge getrennt nach den Raumrichtungen. Auf der Achse $\omega$ sind die Bereiche unterkritisch 18, zwischenkritisch 19 und überkritisch 20 dargestellt.

Im Allgemeinen kann man davon ausgehen, dass die bei einem Turbosatz verwendeten Lager in der horizontalen weicher sind als in der vertikalen Richtung. Daher wird hier davon ausgegangen, dass die horizontale y-Kritische auf der Kreisfrequenzachse immer vor der z-Kritischen kommt. Beide Werte sind kleiner als die kritische Kreisfrequenz bei starren Lagern.

Aufgrund der Anisotropie der Lagerung bewegt sich der Wellenmittelpunkt auf einer elliptischen Bahn, welcher als Orbit bezeichnet wird. Dieser Orbit und somit der Wellenmittelpunkt wird an verschiedenen Stellen des Wellenstranges jeweils mittels zweier Weggeber gemessen und steht für die Bestimmung eines günstigen Kuppelwinkels $\varphi_K$ (Zielwinkel, relativer Verdrehwinkel) zur Verfügung. Die nicht direkt messbare Lage des Schwerpunktes bezüglich des Wellenmittelpunktes bleibt bei unterkritischen Kreisfrequenzen prinzipiell außen und bei Überkritischen innen. Es muss an dieser Stelle noch sein Verlauf bei zwischenkritischen Werten betrachtet werden.

Figur 20 (Möglicher Verlauf von S und W zwischen den kritischen Kreisfrequenzen) zeigt die Orbits von S und W zwischen den zwei kritischen Kreisfrequenzen. Beide haben entgegengesetzten Drehsinn bezüglich der Wellendrehung. Der Schwerpunkt S dreht sich jedoch weiterhin mit der Welle um W und ändert somit seine relative Lage während der Umdrehung. Er befindet sich bezüglich der unterkritischen Raumrichtung außen und der überkritischen Raumrichtung innen.

Sollen zwei zwischenkritische Wellen zusammengekuppelt werden, stehen sich die Schwerpunkte genau dann gegenüber, wenn die Phasendifferenz der Zeiger der Wellenmittelpunkte gerade 180° beträgt.

Der Änderung der Phase eines elliptischen Orbits ist im Gegensatz zu einer Kreisbewegung während einer Umdrehung nicht konstant, womit ein Vergleich der Phasen beider Orbitzeiger kein verwendbares Ergebnis liefert. Also muss ein anderer Weg gefunden werden aus den Messdaten die momentane Lage der Schwerpunkte in Abhängigkeit des Kuppelwinkels abzuschätzen.

Bei dem hier verwendeten Koordinatensystem liegen die Achsen nur der Anschaulichkeit halber in der Horizontalen, resp. Vertikalen. Auch die großen Halbachsen der Orbits liegen nicht zwingend in der Horizontalen. Die Lage des Koordinatensystems ist frei wählbar und kann an den Messstellen ausgerichtet werden. Es muss jedoch das gleiche Koordinatensystem für beide Teilwellenstränge verwendet werden.

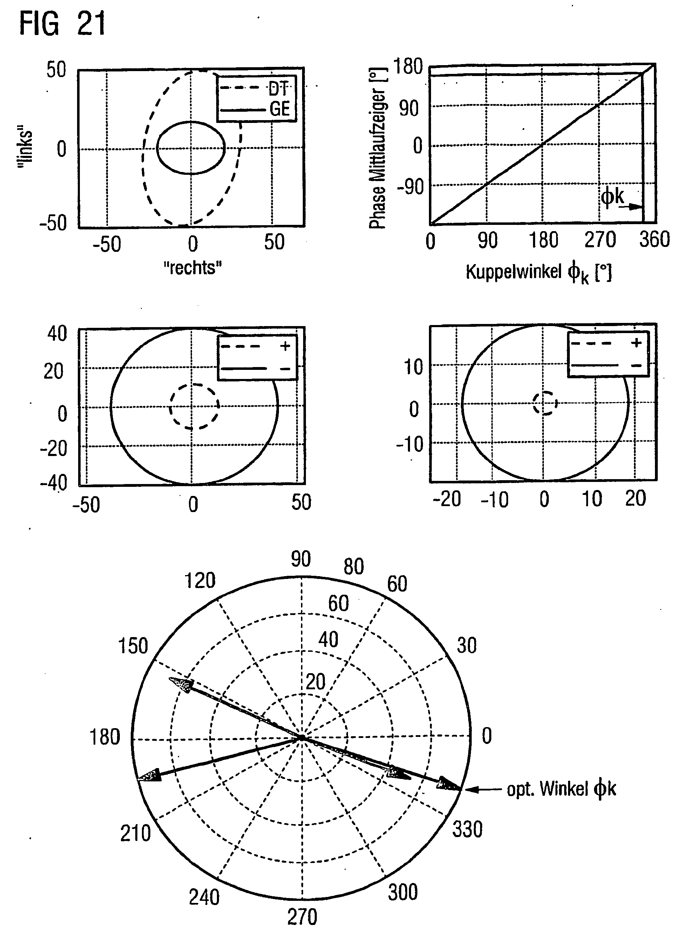

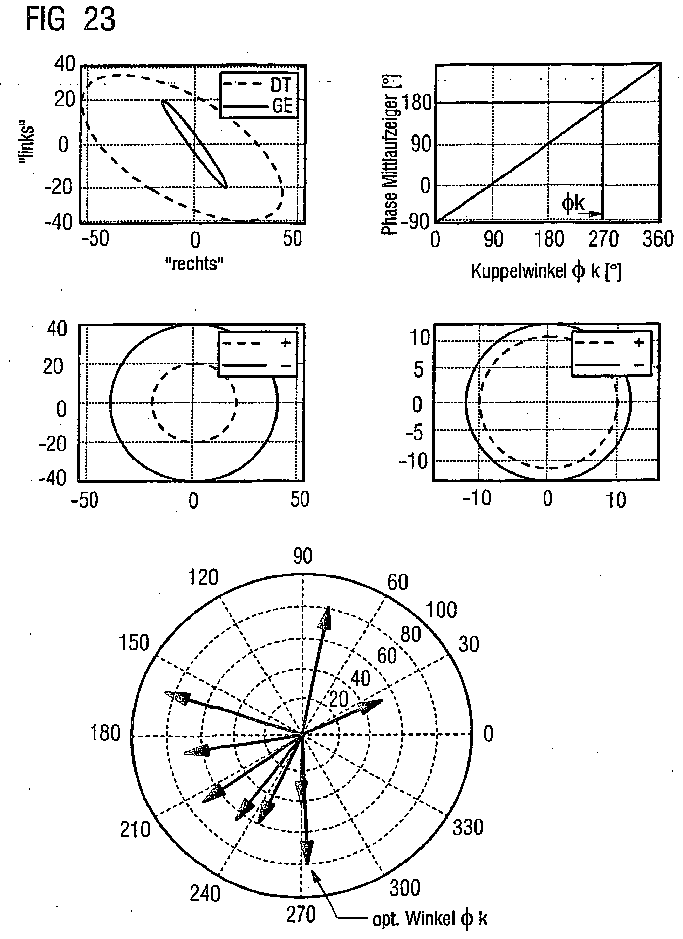

Um die oben getroffenen Überlegungen umzusetzen, müssen die Methoden der komplexen Rechnung auf die zur Verfügung stehenden Messdaten angewendet werden. Nunmehr werden diese Methoden formelmäßig hergeleitet, und eine Anwendung auf Messdaten von Versuchsanlagen 1 bis 3 (Figuren 21 bis 23) vorgestellt, wobei die Versuchsanlage 1 in Figur 23 wiedergegeben ist.

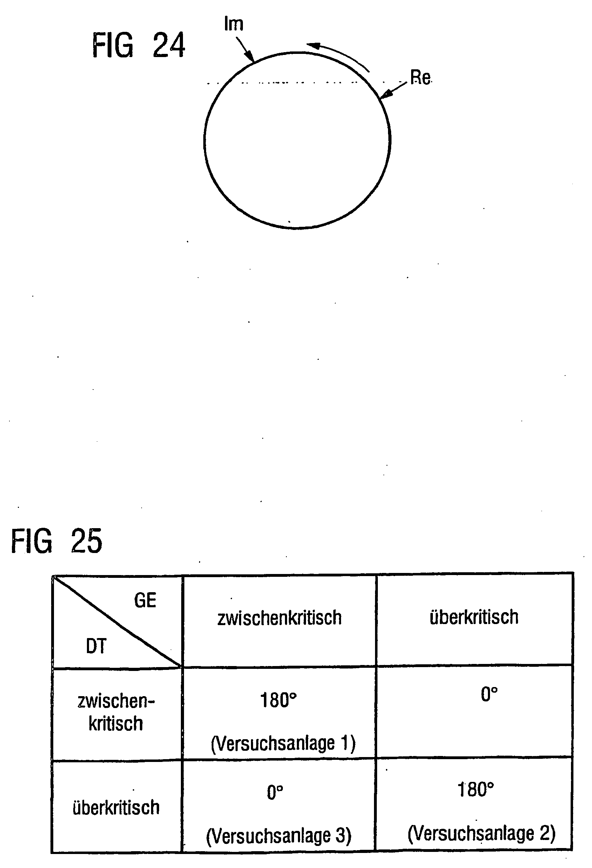

- Je zwei Schwingungsmessungen werden für beide Teilwellenstränge bevorzugt in der Nähe der Kupplung bzw. der SSS-Kupplung durchgeführt. Die bevorzugte Bezeichnung der Messstellen ist in Figur 24 (Definition zur Bezeichnung der Messstellen) definiert. Bei der linkslaufenden Welle befinden sich der linke Geber auf der linken Seite, was dem Imaginärteil (Im) entspricht, und der rechte Geber auf der rechten Seite was dem Realteil (Re) entspricht.

- Für beide Teilwellenstränge wird je ein Impulssignal pro Umdrehung zur Bestimmung der Drehzahl bestimmt, aus deren Zeitdifferenz der relative Verdrehwinkel bestimmt werden kann. Die Differenz in (4) wird als relativer Winkel $j_K$ definiert:

$$\varphi_k = \varphi_{\text{Generator}} - \varphi_{\text{Dampfturbine}} \qquad (4)$$

Zur Auswertung wird die drehfrequente Schwingung nach Amplitude $\hat{A}$ und Phase $\varphi$ (bezogen auf das jeweils eigene Drehzahlsignal) für jedes der vier Signale herausgefiltert. Diese Signale werden als komplexe Raumzeiger dargestellt. Damit liegen die Signale nach folgender Form vor:

$$r_{\text{W,GE}} = \hat{A}_{\text{r,GE}} \cdot \cos(\omega t - \varphi_{\text{r,GE}}) + j \cdot \hat{A}_{\text{l,GE}} \cdot \sin(\omega t - \varphi_{\text{l,GE}} + \pi/2)$$
$$r_{\text{W,DT}} = \hat{A}_{\text{r,DT}} \cdot \cos(\omega t - \varphi_{\text{r,DT}} - \varphi_k) + j \cdot \hat{A}_{\text{l,DT}} \cdot \sin(\omega t - \varphi_{\text{l,DT}} - \varphi_k + \pi/2) \qquad (5)$$

Die Indizes 1 und r stehen für den linken bzw. rechten Geber. Im Folgenden werden die Formeln nur noch für die Gasturbinenseite aufgestellt, da für die Gleichung der Dampfturbine nur die Indizes ausgetauscht und $\varphi_K$ abgezogen werden müssen.

Die elliptischen Bahnen, auf denen sich die Wellendurchstoßpunkte bewegen, lassen sich als die Überlagerung zweier gegenläufiger Kreisbewegungen mit gleicher Winkelgeschwindigkeit aber verschiedenem Radius mathematisch darstellen.

Dazu werden auf (5) die bekannten Eulerschen Gleichungen angewendet:

$$\cos x = \tfrac{1}{2}\left(e^{j \cdot x} + e^{-j \cdot x}\right) \quad \text{und} \quad j \cdot \sin x = \tfrac{1}{2}\left(e^{j \cdot x} - e^{-j \cdot x}\right) \qquad (6)$$

Gleichung (6) eingesetzt in (5) für den Wellenmittelpunkt der Gasturbinenseite ergibt:

$$r_{\text{W,GE}} = \hat{A}_{\text{r,GE}} \cdot \tfrac{1}{2}\left(e^{j(\omega t - \varphi_{\text{r,GE}})} + e^{-j(\omega t - \varphi_{\text{r,GE}})}\right) + \hat{A}_{\text{l,GE}} \cdot \tfrac{1}{2}\left(e^{j(\omega t - \varphi_{\text{l,GE}} + \pi/2)} - e^{-j(\omega t - \varphi_{\text{l,GE}} + \pi/2)}\right) \qquad (7)$$

Durch Ausklammern von $e^{j\omega t}$ resp. $e^{-j\omega t}$ und Trennung nach positiven und negativen Exponenten ergibt sich folgende Gleichung:

$$r_{\text{W,GE}} = \underbrace{\tfrac{1}{2}\left(\hat{A}_{\text{r,GE}} \cdot e^{-j \cdot \varphi_{\text{r,GE}}} + \hat{A}_{\text{l,GE}} \cdot e^{-j(\varphi_{\text{l,GE}} - \pi/2)}\right)}_{\hat{r}_+} e^{j \cdot \omega t} + \underbrace{\tfrac{1}{2}\left(\hat{A}_{\text{r,GE}} \cdot e^{-j \cdot \varphi_{\text{r,GE}}} - \hat{A}_{\text{l,GE}} \cdot e^{-j(\varphi_{\text{l,GE}} - \pi/2)}\right)}_{\hat{r}_-} e^{-j \cdot \omega t} \qquad (8)$$

$\hat{r}_+$ ist dabei der Radius einer Kreisbahn, welche als Mitlaufanteil des Orbits bezeichnet wird, und $\hat{r}_-$ ist der Radius eines Kreises mit der Bezeichnung Gegenlaufanteil. Hierbei beziehen sich Mitlaufanteil und Gegenlaufanteil auf den Drehsinn der Welle. Die jeweilige Phasenlage ist in $\hat{r}_+$ und $\hat{r}_-$ enthalten. In den Figuren 21 bis 23 ist eine derartige Zerlegung mit den Messdaten durchgeführt worden.

In den Figuren 21 bis 23 sind jeweils oben links Orbits der Teilwellenstränge, oben Rechts Phasendifferenz der Mitlaufzeiger, mitte Links Mitlauf- und Gegenlaufteil der Dampfturbine, mitte Rechts Mitlauf- und Gegenlaufteil des Generators und unten eine Kuppelkarte dargestellt.

Der Schwerpunkt S der Welle, welcher bei beiden Wellensträngen möglichst gegenüber liegen sollte, bewegt sich mit der synchronen Kreisfrequenz $\omega$ in Drehrichtung um den Wellendurchstoßpunkt W.

Daraus ergibt sich Gleichung (9) für die Bahn von S:

$$r_{\text{S,GE}} = r_{\text{W,GE}} + \varepsilon \cdot e^{j(\omega t + \varphi_0)} \qquad (9)$$

Dabei ist $\varepsilon$ der Abstand von S zu W. Nach einsetzen von (8) erhält man die folgende Gleichung für $r_{S,GT}$:

$$r_{S,GE} = (\hat{r}_+ + \varepsilon \cdot e^{-j\cdot\varphi_0})e^{j\cdot\omega t} + \hat{r}_- \cdot e^{-j\cdot\omega t} \tag{10}$$

Der Winkel $\varphi_0$ ist ein konstanter Wert und abhängig von Dämpfung und Kreisfrequenz. Es wird ersichtlich, dass nur Radius und Phase der Mitlaufanteile von Schwerpunkt und Wellenmittelpunkt unterschiedlich sind, wobei der Gegenlaufanteil für beide Punkte der Gleiche ist.

Weiterhin wird angenommen, dass der mitlaufende Zeiger durch die Unwucht bestimmt wird und der gegenläufige Zeiger die anisotrope Rückwirkung der Lager repräsentiert:

$$r_{W,GE} = \underbrace{\hat{r}_+ \cdot e^{j\cdot\omega t}}_{\substack{\text{Durch die Unwucht} \\ \text{bestimmter Anteil}}} + \underbrace{\hat{r}_- \cdot e^{-j\cdot\omega t}}_{\substack{\text{erzeugt durch} \\ \text{Anisotropie der} \\ \text{Lagersteifigkeiten}}} \tag{11}$$

Unter der Annahme, dass nur die resultierende Unwucht abhängig vom Kuppelwinkel ist, werden für die Findung eines günstigen Winkels bevorzugt nur die Mitlaufanteile der Wellenschwingung berücksichtigt.

Bei den Mitlaufanteilen handelt es sich um kreisförmige Orbits, deren Amplitude und Winkelgeschwindigkeit konstant während einer Umdrehung sind. Bei unterschiedlichen Drehzahlen beider Wellen kann ein Vergleich der Phasenlage vorgenommen werden. Da nach Gleichung (10) auch die Amplitude des Mitlaufanteils des Schwerpunkts konstant ist, gibt dieser Vergleich vorteilhaft auch Aufschluss über seine Lage.

Um den optimalen Kuppelwinkel $\varphi_K$ (Zielwinkel, Verdrehwinkel) zu bestimmen, muss die Phasendifferenz der Mitlaufzeiger von Dampfturbinen- und Gasturbinenseite bestimmt werden. Dazu wird die Dampfturbine mit z.B. -10 U/min untersynchron und die Gasturbine mit synchroner Drehzahl stationär betrieben. Nach Verarbeitung der Schwingungsmessungen, wie oben beschrieben, liegen die Mitlaufzeiger nach Betrag und Phase für beide Teilwellenstränge vor. Durch die kleine Differenz in der Winkelgeschwindigkeit ändert sich der relative Verdrehwinkel $\varphi_K$ langsam, und damit auch die Phasenlage der Mitlaufzeiger. Die Winkel ändern sich dabei mit der gleichen Rate.

Abhängig davon, ob die Wellen über-, zwischen- oder unterkritisch betrieben werden, muss die Phasendifferenz der Wellenstränge 0° oder 180° betragen, damit die Schwerpunkte sich gerade möglichst gegenüberliegen und somit gegenseitig in ihrer Wirkung kompensieren. Zu diesem Zeitpunkt entspricht der Verdrehwinkel gerade dem günstigen Kuppelwinkel. Dieser muss von einem entsprechenden Automatisierungsgerät gespeichert und von der Regelung als Zielwinkel verwendet werden.

Figur 25 (Phasenlage der Mitlaufzeiger bei günstigem Kuppelwinkel) zeigt die Phasendifferenz der Mitlaufzeiger bei der sich auf Basis der theoretischen Grundlagen ein günstiger Kuppelwinkel ergibt.

Eine Einordnung der jeweiligen Versuchsanlage in die Tabelle (Figur 25) kann nach Zerlegung der Orbits in Mit- und Gegenlaufanteil geschehen. Wellenstränge im zwischenkritischen Betrieb haben einen gegenläufigen Orbit. Dies ist der Fall wenn der Betrag des Gegenlaufanteils größer ist, als derjenige des Mitlaufanteils. Diese Betrachtung wurde mit den Messdaten der drei Versuchsanlagen vorgenommen, wie in Figur 25 zu sehen ist.

Zum Vergleich liegen Messungen aus drei verschiedenen Anlagen vor, wobei die hier verarbeiteten Wellenschwingungen im transienten Drehzahlbetrieb ermittelt worden sind.

Figur 21 zeigt die Schritte zur Bestimmung des günstigen Kuppelwinkels am Beispiel der GUD Versuchsanlage 2 auf. Im Bild oben links sind die Orbits der beiden Teilwellenstränge dargestellt. Die Bilder in der zweiten Zeile zeigen die Zerlegung nach Mit- und Gegenlaufanteil. Das Bild oben rechts zeigt die Phasendifferenz der Mitlaufzeiger gegenüber dem Kuppelwinkel $\varphi_K$ auf. Es wird in dem Fall davon ausgegangen, dass beide Wellen überkritisch betrieben werden, d.h. die Phasendifferenz der Mitlaufzeiger muss gerade 180° betragen, damit ein günstiger Kuppelwinkel $\varphi_K$ vorliegt. In diesem Teilbild zur Figur 21 ist auch gut zu erkennen, dass sich die Phasen der Mitlaufzeiger genauso schnell ändern wie der Kuppelwinkel $\varphi_K$.

Im Bild unten ist eine Kuppelkarte mit drei gemessenen Wellenschwingungen dargestellt. Die Länge der Zeiger entspricht den Schwingungen nach Abklingen aller Ausgleichsvorgänge, wobei der Winkel in dem sie aufgetragen sind dem gemessenen Kuppelwinkel entspricht. Als zusätzlicher Zeiger ist der ermittelte optimale Kuppelwinkel $\varphi_K$ eingezeichnet. Die Läge dieses Zeigers hat keine Bedeutung und ist nur der Anschaulichkeit groß gewählt worden. Offensichtlich liegt der ermittelte Winkel im Bereich kleiner Schwingungen auf der Kuppelkarte.

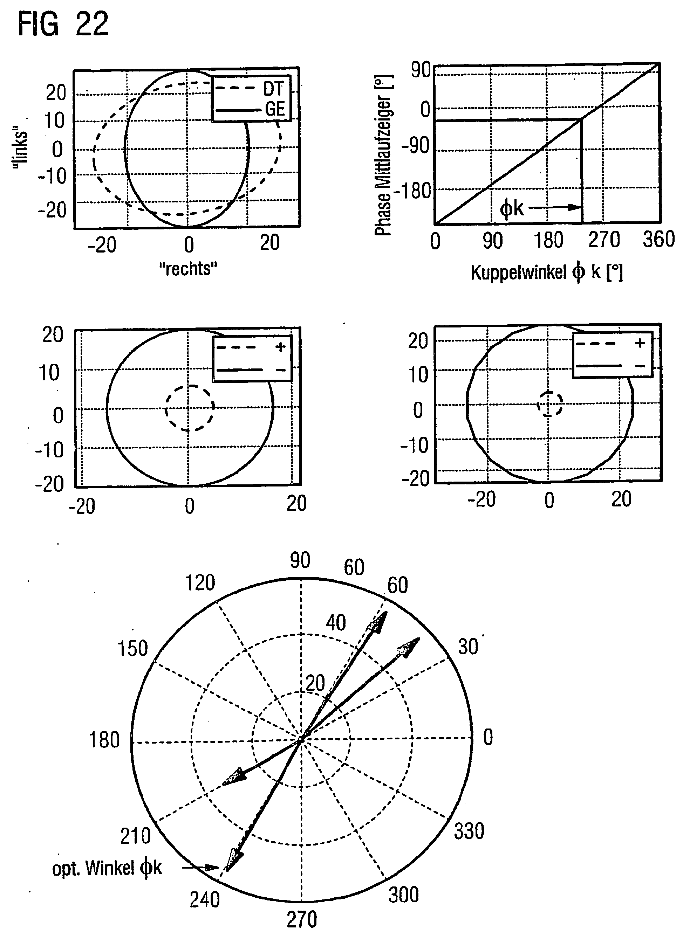

Figur 22 zeigt die Ergebnisse für eine Versuchsanlage 3. In diesem Fall ist die Gasturbine zwischenkritisch betrieben (Gegenlaufzeiger größer als der Mitlaufzeiger) und die Dampfturbine überkritisch. In diesem Fall wurde der Kuppelwinkel bei einer Phasendifferenz von 0° ermittelt. Die Kuppelkarte zeigt, dass auch dieser Kuppelwinkel $\varphi_K$ im günstigen Bereich liegt.

Im Fall der Versuchsanlage 1 (Figur 23) sind bei beiden Teilwellensträngen die Gegenlaufzeiger größer als die Mitlaufzeiger, was auf einen zwischenkritischen Betrieb hindeutet. Der optimale Kuppelwinkel liegt dann bei einer Phasendifferenz von 180° vor. Bei dieser Anlage waren mehr Messdaten verfügbar, was in der Kuppelkarte zu sehen ist. Der günstige Kuppelwinkel liegt auch hier bei den kleineren Schwingungen.

Vorteilhaft wird eine Haltedrehzahl von bevorzugt -10 U/min eingeführt, von der aus ein vorgegebener Zielwinkel mit einer beliebigen Drehzahltransiente erreicht werden kann. Die Differenz $\Delta\varphi$ zwischen Startwinkel und Zielwinkel bzw. Kuppelwinkel ist Anlagenspezifisch konstant gegenüber dem Kuppelwinkel $\varphi_k$, und kann deshalb bei Inbetriebnahme gemessen werden.

Im Stand der Technik wird das Signal KUPE, welches den eingekuppelten Zustand anzeigt, zu früh gesetzt. Mittels des erfindungsgemäßen Verfahrens wird vorgeschlagen, das Signal näher am eigentlichen Einkuppelvorgang zu setzen.

Impulssignale, welche zur Ermittlung der Drehzahl jeweils ein Signal pro Umdrehung liefern, sind ein direktes Maß für die Bestimmung der relativen Verdrehung von Antrieb (Dampfturbinenseite) und Abtrieb (Generatorseite). Im Stand der Technik ist dieser Winkel (Kuppelwinkel bzw. relativer Verdrehwinkel $\varphi_K$) rein zufällig und kann alle von der Anzahl der Klinkenzähne abhängigen Werte annehmen.

Für den stationären Betrieb liegt ein günstiger Kupplungszustand vor, wenn die Schwerpunkte der Teilwellenstränge sich bezüglich des Wellenmittelpunktes gegenüberliegen, und somit in ihrer Wirkung teilweise kompensieren.

Günstige Kuppelwinkel können ermittelt werden, wenn sich die Gasturbine im Nennbetrieb und die Dampfturbine auf der Haltedrehzahl befindet. Die an den Messstellen nahe der SSS-Kupplung ermittelten Wellenschwingungen werden mit Hilfe der komplexen Rechenmethoden in Mit- und Gegenlaufanteil zerlegt. Ein Vergleich der Phasenlage der beiden Mitlaufzeiger liefert Aufschluss über günstige Kuppelwinkel. Dabei sollte die Nenndrehzahl der Welle bezüglich der kritischen Drehzahlen berücksichtigt werden.

Wenn bei bestehenden Anlagen eine Kuppelkarte vorhanden ist, kann der Winkel direkt als Zielwinkel in der Regelung übernommen werden.

**Patentansprüche**

1. Verfahren zum Kuppeln einer Antriebswelle einer Strömungsmaschine mit einer Abtriebswelle mittels einer Kupplung,
   wobei die Strömungsmaschine auf eine in Bezug auf die Abtriebswelle untersynchrone Drehzahl hochgefahren und auf dieser Haltedrehzahl gehalten wird, bevor ein Signal zum Starten des Kuppelns gesetzt wird,
   **dadurch gekennzeichnet, dass**
   das Signal zum Starten des Kuppelns gesetzt wird, wenn die Phasendifferenz der Teilwellenstränge so ist, dass sich beide Schwerpunkte gegenüberliegen.

2. Verfahren nach Anspruch 1,
   **dadurch gekennzeichnet, dass**
   die Haltedrehzahl einen Betrag von -10U/min bezogen auf die Abtriebswelle aufweist.

3. Verfahren nach Anspruch 1 oder 2,
   **dadurch gekennzeichnet, dass**
   ein relativer Verdrehwinkel der beiden Teilwellenstränge bestimmt wird.

4. Verfahren nach einem der vorhergehenden Ansprüche,
   **dadurch gekennzeichnet, dass**
   das Signal zum Einkuppeln gesperrt wird, so dass in diesem ausgekuppelten Zustand der beiden Teilwellenstränge Wellenschwingungen bestimmbar und vergleichbar sind.

5. Verfahren nach einem der vorhergehenden Ansprüche,
   **dadurch gekennzeichnet, dass**
   je zwei Schwingungsmessungen für beide Teilwellenstränge durchgeführt werden.

6. Verfahren nach einem der vorhergehenden Ansprüche,
   **dadurch gekennzeichnet, dass**
   für beide Teilwellenstränge je ein Impulssignal pro Umdrehung zur Bestimmung der Drehzahl bestimmt wird.

7. Verfahren nach einem der vorhergehenden Ansprüche,

**dadurch gekennzeichnet, dass**

eine Phasendifferenz von Mitlaufzeigern der Antriebswelle und der Abtriebswelle bestimmt wird.

**8.** Verfahren nach einem der vorhergehenden Ansprüche,
**dadurch gekennzeichnet, dass**
der relative Verdrehwinkel in einem Automatisierungsgerät gespeichert und von einer Regelung verwendet wird.

**Claims**

**1.** Method for clutch engagement of an input drive shaft of a continuous flow machine to an output drive shaft by means of a clutch,
wherein the continuous flow machine is accelerated to a rotation speed which is subsynchronous with respect to the output drive shaft and is held at this steady rotation speed, before a signal is set in order to start the clutch engagement process,
**characterized in that**
the signal for starting the engagement process is set when the phase difference between the partial shaft trains is such that both centers of gravity are opposite.

**2.** Method according to Claim 1,
**characterized in that**
the steady rotation speed has a magnitude of -10 rpm with respect to the output drive shaft.

**3.** Method according to Claim 1 or 2,
**characterized in that**
a relative twist angle between the two partial shaft trains is determined.

**4.** Method according to one of the preceding claims,
**characterized in that**
the signal for clutch engagement is blocked, in such a way that shaft oscillations can be determined and compared in this disengaged state of the two partial shaft trains.

**5.** Method according to one of the preceding claims,
**characterized in that**
two oscillation measurements are in each case carried out for both partial shaft trains.

**6.** Method according to one of the preceding claims, **characterized in that** one pulsed signal is in each case determined per revolution for both partial shaft trains, in order to determine the rotation speed.

**7.** Method according to one of the preceding claims, **characterized in that** a phase difference is determined by forward-running vectors of the input drive shaft and of the output drive shaft.

**8.** Method according to one of the preceding claims, **characterized in that** the relative twist angle is stored in an automation appliance, and is used by a closed-loop control system.

**Revendications**

**1.** Procédé d'accouplement d'un arbre d'entrée d'une turbomachine à un arbre de sortie au moyen d'un accouplement,
dans lequel on démarre la turbomachine à une vitesse de rotation hyposynchrone par rapport à l'arbre de sortie et on la maintient à cette vitesse de rotation de maintien avant d'émettre un signal de commencement de l'accouplement,
**caractérisé en ce que**
on émet le signal de commencement de l'accouplement lorsque la différence de phase des lignes d'arbres partielles est telle que les deux centres de gravité sont opposés.

**2.** Procédé suivant la revendication 1,
**caractérisé en ce que**
la vitesse de rotation de maintien a une valeur de -10Tours/min rapportée à l'arbre de sortie.

3. Procédé suivant la revendication 1 ou 2,
   **caractérisé en ce que**
   on définit un angle de torsion relatif des deux lignes d'arbres partielles.

4. Procédé suivant l'une des revendications précédentes,
   **caractérisé en ce que**
   on bloque le signal d'accouplement de manière à pouvoir, dans cet état désaccouplées des deux lignes d'arbres partielles, déterminer et comparer des vibrations d'arbre.

5. Procédé suivant l'une des revendications précédentes,
   **caractérisé en ce que**
   on effectue respectivement deux mesures de vibration pour les deux lignes d'arbres partielles.

6. Procédé suivant l'une des revendications précédentes,
   **caractérisé en ce que**
   pour déterminer la vitesse de rotation, on détermine pour les deux lignes d'arbre partielles respectivement un signal d'impulsion par tour.

7. Procédé suivant l'une des revendications précédentes,
   **caractérisé en ce que**
   on détermine une différence de phases de vecteurs tournants de l'arbre d'entrée et de l'arbre de sortie.

8. Procédé suivant l'une des revendications précédentes,
   **caractérisé en ce que**
   on mémorise l'angle de torsion relatif dans un appareil d'automatisation et on l'utilise pour une régulation.

FIG 1

FIG 2

**FIG 3**

Zudampf — FD-STV — Brennstoff-STV — AF-STV — Zwischenüberhitzer — Schaltkupplung — Kraftwerks-Transformator — AHK — SC — Netz 1 — Netz 2

$n_{ist,DT}$ — $n_{ist,GT}$ — $P_{ist}$ — E — H — G — GT

zum FD-Stellventil — Stellungs-reglung — M − N — Grenzdruck Regler

zum Abfang-Stellventil — Stellungs-reglung — M − N — Staffelung — HD-Abda-Temp-Regler

zur Zudampf-Stellkappe — Stellungs-reglung — M − N — Staffelung

TAB — M − N — Drehz/Öffn Regler (DT) — FD-Druck Regler — ZÜ-Druck Regler — ZUD-Druck Regler

M − N — Drehz/Leist Regler — Temperatur Regler

$n_{soll}$ — $P_{soll}$ — $P_{ist}$ — $n_{ist,GT}$

14

# FIG 4

FIG 5

EP 2 078 139 B1

FIG 6

EP 2 078 139 B1

**FIG 7**

KUPA

+0,33 Hz/ +20 U/min ——

$\dfrac{dn}{dt} = 0,05\ \dfrac{Hz}{s}$

KUPE  (KUPE)

50 Hz ——————————— 16

-0,083 Hz/ -5 U/min

-0,5 Hz

$\dfrac{dn}{dt} = 0,167\ \dfrac{Hz}{s}$

KUPA

EP 2 078 139 B1

FIG 8

19

# FIG 9

| | | |
|---|---|---|
| | Turb.Moment DT A(48)/pu | 0.1 — 0.0 — -0.1 |
| nsoll - nist A(2)/pu | Drehz.Anteil Regler (DT) A(17)/pu | 0.1 — 0.0 — -0.1 |
| | Drehz./Öffn. Regler (DT) A(18)/pu | |
| KUPE A(1.4) | rel. Winkelgeschw. Delta Omega pu *10 | 5 — 0 — -5 |
| KSTART A(1.1) | Verdrehwinkel Kuppl. Delta Phi Grad | 180 — 0 — -180 |
| Zahneingriff SK2/ SK3 | Zahnmoment SK2/ SK3 MNm | 0.05 — 0.00 — -0.05 |

2995 U/min

Allgemeine Daten

3.00    4.75    6.50    8.25    10.00 SEC

EP 2 078 139 B1

# FIG 10

Turb.Moment DT A(48)/pu

nsoll - nist A(2)/pu

Drehz.Anteil Regler (DT) A(17)/pu

Drehz./Öffn. Regler (DT) A(18)/pu

KUPE A(1.4)

rel. Winkelgeschw. Delta Omega pu *10

2995 U/min

KSTART A(1.1)

Verdrehwinkel Kuppl. Delta Phi Grad

Zahneingriff SK2/ SK3

Zahnmoment SK2/ SK3 MNm

Allgemeine Daten

EP 2 078 139 B1

# FIG 11

$$+0{,}33 \text{ Hz}/ +20 \text{ U/min}$$

$$\frac{dn}{dt} = 0{,}05 \frac{\text{Hz}}{\text{s}}$$

(KUPA)

(KUPE)

$$50 \text{ s}^{-1}$$

16

$$-0{,}083 \text{ Hz}/ -5 \text{ U/min}$$

Kupplung "Aus" (Kupa)

17

(KSTART)

$$-0{,}167 \text{ Hz}/ -10 \text{ U/min}$$

(KUPA)

$$\frac{dn}{dt} = 0{,}167 \frac{\text{Hz}}{\text{s}}$$

# FIG 12

# FIG 13

EP 2 078 139 B1

# FIG 14

EP 2 078 139 B1

## FIG 15

## FIG 16

11:34:00    11:35:00    11:36:00    11:37:00    11:38:00

FIG 17

FIG 18

FIG 19

$|Y_W|, |Z_W|$

$\varepsilon$

$\omega_y$  $\omega_z$  $\omega_0$

18

19

20

$\omega$

FIG 20

S

$\omega$  W

S  W

M

y, Im

W  S

W

S

z, Re

# FIG 21

opt. Winkel φk

# FIG 22

# FIG 23

**FIG 24**

**FIG 25**

| | zwischenkritisch | überkritisch |
|---|---|---|
| GE / DT | | |
| zwischen-kritisch | 180°<br><br>(Versuchsanlage 1) | 0° |
| überkritisch | 0°<br><br>(Versuchsanlage 3) | 180°<br><br>(Versuchsanlage 2) |

**EP 2 078 139 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005183422 A1